# EUROPÄISCHE PATENTANMELDUNG

(11) **EP 2 587 184 A1**
(43) Veröffentlichungstag der Anmeldung: **01.05.2013**
(21) Anmeldenummer: 12188468.8
(22) Anmeldetag: 15.10.2012
(51) Int. Cl.: F24J 2/20, F24J 2/22, F24J 2/50

(54) **Solarkollektor**

(30) Priorität: 31.10.2011 DE 102011117290
(71) Anmelder: ROBERT BOSCH GMBH, 70442 Stuttgart (DE)
(72) Erfinder: De Bruin, Robert, 71739 Oberriexingen (DE)

(57) **Zusammenfassung**

Bekannte geschlossene Solarkollektoren weisen recht hohe Herstellungskosten und ein hohes Gewicht auf. Sie bestehen aus einer Vielzahl an Bauteilen wie einer Abdeckplatte, einem Gehäuse bestehend aus Rahmen und Bodenplatte, Absorptionsplatten, Reflektoren, Leitungen und Isolationsmaterialien. Ein weiterer Nachteil liegt in der ästhetischen Anmutung. Aufgabe der Erfindung ist es deshalb, die Nachteile des Standes der Technik zu überwinden. Die Erfindung betrifft daher einen Solarkollektor (1) mit einem Hohlraum (30) für ein Wärmeträgermedium (M) zwischen einer expositionsseitigen (ES) gläsernen Abdeckplatte (10) und einer dahinter liegenden Platte (20), wobei der Hohlraum (30) mit einem Einlass (31) und einem Auslass (32) hydraulisch verbunden ist, und wobei die Platte (20) in Richtung der Abdeckplatte (10) ausgerichtete Erhebungen (21) aufweist, welche mit der Rückseite der Abdeckplatte (10) verbunden sind.

## Beschreibung

Die Erfindung betrifft einen Solarkollektor nach dem Oberbegriff des Patentanspruchs 1.

Solarkollektoren dienen der Wärmegewinnung mittels Sonnenenergie. Hierfür werden sie an sonnenexponierten Orten aufgestellt und sind mit ihrer Expositionsseite in Sonnenrichtung ausgerichtet. Der Solarkollektor ist über einen Einlass und einen Auslass in einen Kreislauf mit einem Wärmeträgermedium eingebunden. Eine Absorptionsfläche des Solarkollektors wandelt dabei eine möglichst große Menge Sonnenstrahlung in Wärme um. Die gewonnene Wärme wird auf das Wärmeträgermedium übertragen. Durch Umwälzung des Mediums im Kreislauf kann die Wärme an einen Wärmeempfänger weitergeleitet werden, z.B. an einen Swimmingpool oder einen Pufferspeicher.

Vielfach verwendet werden offene Solarkollektoren, d.h. Solarkollektoren ohne eine Abdeckplatte. Die Absorptionsfläche ist dann beispielsweise direkt auf einer Fluidleitung des Solarkollektors angeordnet. Das Äußere des Solarkollektors ist dabei wenig ästhetisch, die verschmutzungsanfällige Struktur und Oberfläche trägt ebenfalls nicht zum optischen Gesamtbild positiv bei.. So verfängt sich häufig Laub in auf Dächern verlegten Solarkollektor-Leitungen. In Kombination mit Photovoltaik-Modulen auf einem Dach oder an einer Fassade entsteht ein sehr unruhiger Anblick mit einer überladenen Fülle an unterschiedlichen Objekten auf dem Dach oder an der Fassade. Zusätzlich kommt es bei offenen Solarkollektoren zu einem relativ hohen Wärmeverlust durch Abstrahlungswärme an die Umgebung.

Eine teilweise Behebung dieser Probleme gelingt durch das Vorsehen einer Abdeckplatte auf der sonnenexponierten Seite des Solarkollektors. Zusätzlich kommen Gehäuse zum Einsatz, die gemeinsam mit der Abdeckplatte einen geschlossenen Raum ausbilden. In diesem kann sich die Wärme stauen und Wärmeverluste durch Abstrahlung sind gering. Die meist gläserne und transparente Abdeckplatte sorgt für eine verbesserte Ästhetik und verringerte Schmutzempfindlichkeit.

Der Nachteil der bekannten Lösungen sind die hohen Herstellungskosten für einen Solarkollektor mit einer Abdeckplatte, einem Gehäuse bestehend aus Rahmen und

Bodenplatte, Absorptionsplatten, Reflektoren, Leitungen und Isolationsmaterialien (Wärmedämmung).

Um die Herstellungskosten zu reduzieren und eine hohe Effizienz, in Bezug auf die Wärmegewinnung pro einstrahlender Sonnenstrahlung, zu erzielen, verzichtet bspw. DE 10 2008 029 676 A1 auf separate Rohrleitungen. Die Leitungen werden hier im Wesentlichen direkt in der Absorptionsplatte ausgebildet. Dies ist jedoch auch kostspielig und vermag die Herstellungskosten kaum zu senken.

Auch EP 0 039 379 B1 verzichtet auf Leitungen. Durch eine dreidimensional geformte Absorptionsplatte werden Kanäle zwischen der Absorptionsplatte und der ebenen Bodenplatte ausgebildet. Zusätzlich wird der Zwischenraum zwischen der Absorptionsplatte und der Abdeckplatte vom Wärmeträgermedium durchströmt. Zur Herstellung dieses Zwischenraums sind Abstandshalter zwischen der Absorptionsplatte und der Abdeckplatte vorgesehen. Die dreidimensionale Form der Absorptionsplatte umfasst eine ebene Platte, in welche Pyramidenstümpfe zweier Größen geprägt sind. Diese zeigen in Richtung der Bodenplatte. Die größeren der Pyramidenstümpfe grenzen an die Bodenplatte und die kleineren sind von der Bodenplatte beabstandet. Es befindet sich jeweils eine Öffnung in der Spitze der kleinen Pyramidenstümpfe, um eine Strömungsverbindung für das Wärmeträgermedium durch die Absorptionsplatte bereitzustellen. Das Wärmeträgermedium wird durch einen Einlass in der Bodenplatte zwischen der Absorptionsplatte und der Bodenplatte eingeleitet und durch Sonnenstrahlung vorgewärmt. Nach Durchströmen der Öffnungen in den kleinen Pyramidenstümpfen strömt es anschließend zwischen der Abdeckplatte und der Absorptionsplatte zu einem Auslass. Nachteilig hierbei sind ebenfalls relativ hohe Herstellungskosten, ein relativ hoher Aufbau und ein hohes Gewicht. Zudem ist die Ästhetik schlecht, da die Abdeckscheibe transparent und die Absorptionsplatte somit sichtbar ist.

Aufgabe der Erfindung ist es deshalb, die Nachteile des Standes der Technik zu überwinden und einen Solarkollektor zu entwickeln, der eine hohe Effizienz, ein geringes Gewicht sowie geringe Herstellungskosten aufweist. Zudem soll die Bauhöhe des Solarkollektors gering sein.

Erfindungsgemäß wird dies mit Anspruch 1 gelöst. Vorteilhafte Weiterbildungen sind den Unteransprüchen 2 bis 11 zu entnehmen.

Bei einem Solarkollektor mit einem Hohlraum für ein Wärmeträgermedium zwischen einer expositionsseitigen gläsernen Abdeckplatte und einer dahinter liegenden Platte, wobei der Hohlraum mit einem Einlass und einem Auslass hydraulisch verbunden ist, sieht die Erfindung vor, dass die Platte in Richtung der Abdeckplatte ausgerichtete Erhebungen aufweist, welche mit der Rückseite der Abdeckplatte verbunden sind.

Besonders vorteilhaft hierbei ist der sehr flache Aufbau, der zudem wenig kostet. Die Platte und die Abdeckplatte stabilisieren sich aufgrund der Verbindungen an den Erhebungen gegenseitig. Es ergibt sich eine steife Struktur und die Abdeckplatte wird zum Beispiel bei einer aufliegenden Schneelast gestützt. Der Werkstoff Glas der Abdeckplatte ist schmutzabweisend, langlebig und optisch anmutend. Aus Richtung der Expositionsseite kann das Wärmeträgermedium von Sonnenstrahlung erwärmt werden. Weiterhin können die Flächen der Verbindungen auf ein mechanisch notwendiges Minimum reduziert werden, wodurch eine möglichst große Fläche der Abdeckplatte vom Wärmeträgermedium hinterströmt wird.

Eine Weiterbildung der Erfindung sieht vor, dass die Platte einen trapezprofil-förmigen Querschnitt hat. Die Platte könnte hierfür ein Trapezblech sein. Trapezbleche sind als Halbzeug kostengünstig verfügbar. Aus Kunststoff hergestellte Trapezprofile bieten dahingegen Gewichtsvorteile.

Das Trapezprofil bildet benachbarte Strömungskanäle aus, die gleichmäßig durchströmbar sind. Die Wärmeaufnahme ist dann über die gesamte Fläche gleichmäßig und die Effizienz des Solarkollektors hoch. Trapezprofile haben zudem in einer Richtung eine hohe Eigensteifigkeit. Deswegen sollten die Biegekanten an der langen Seite des Solarkollektors ausgebildet sein. Aufgrund der Eigensteifigkeit kann die Materialstärke gering gewählt werden, was die Herstellkosten und das Gewicht senkt. Zur Optimierung der Effizienz sollten die Verbindungsflächen des Trapezprofils zur Abdeckplatte schmal ausgebildet sein.

Eine andere Ausbildung der Erfindung betrifft eine becherförmige Gestaltung der Erhebungen der Platte. Die becherförmigen Erhebungen sind durch Umformen, insbesondere Tiefziehen oder Prägen einer ebenen Platte herstellbar. Entsprechend sind die Erhebungen einteilig mit der Platte ausgebildet. Vorzugsweise ist die Platte aus Kunststoff oder rostfreiem Stahl hergestellt. Eine Becherstruktur erlaubt eine gleichmäßige punktuelle Stützung der Abdeckplatte bei minimierter Verbindungsfläche. Entsprechend ist die Effizienz der Wärmeaufnahme hoch. Zu beachten sind jedoch eine Anordnung des Einlasses und des Auslasses und eine Strömungsgeschwindigkeit derart, dass bei Durchströmung des Hohlraums keine stehenden Wärmeträgermedium-Bereiche entstehen. Solche würden die Effizienz verringern.

Die Abdeckplatte sollte eben ausgebildet sein und vor allem eine ebene zur Platte zeigende Rückseite aufweisen. Ebene Glasplatten sind preiswert und können einfach mit der Platte verbunden werden. Zudem ist eine ebene Außenseite schmutzunempfindlich sowie ästhetisch anmutend.

Eine bevorzugte Gestaltung der Abdeckplatte sieht vor, dass diese wenigstens selektiv lichtundurchlässig ist. Dies verringert die Sichtbarkeit des Inneren des Solarkollektors und verbessert die ästhetischen Eigenschaften. Dabei ist das äußere Erscheinungsbild an das eines Photovoltaikmoduls anpassbar. Idealerweise werden Photovoltaik-Module und Solarkollektoren mit gleichem äußerem Erscheinungsbild hergestellt, damit diese in einer harmonischen Fläche gemeinsam anzuordnen sind. Die selektive Lichtundurchlässigkeit kann zudem die Effizienz des Solarkollektors verbessern, indem Abstrahlungsverluste durch Infrarot-Wärmestrahlung verringert werden.

Entsprechend einer Weiterbildung der Erfindung weist die Abdeckplatte eine wenigstens selektiv lichtundurchlässige Absorptionsschicht auf. Schichten sind in der Herstellung einfacher handhabbar als eine Einbettung von Zuschlagstoffen in das Glas der Abdeckplatte. Demgemäß sind die Herstellkosten gering. Um die Absorptionsschicht vor mechanischen Schäden zu schützen, sollte diese auf der der Platte zugewandten Seite der Abdeckplatte angeordnet sein oder aber in deren Kern.

Eine einfache Herstellungsmethode der Absorptionsschicht sieht vor, dass die wenigstens selektiv lichtundurchlässige Absorptionsschicht eine Folie ist. Die Abdeckplatte kann aus einem Verbundglas bestehen und die wenigstens selektiv lichtundurchlässige Absorptionsschicht in das Verbundglas eingebettet sein, zum Beispiel durch das Einlegen der Folie als Zwischenschicht im Verbundglas.

Besonders zu bevorzugen ist eine Absorptionsschicht mit einem selektiv lichtundurchlässigen Mikrostrukturgitter. Auf einem Trägerelement, d.h. einer Glasplatte, Folie oder ähnliches, aufgebrachte Mikrostruktur-Gitter weisen Stege aus einem Material und Zwischenräume auf, wobei in den Zwischenräumen entweder überhaupt kein Material vorhanden ist, oder aber die Schichtdicke des Materials wesentlich geringer ist als im Bereich der Stege.

Aufgebracht auf ein lichtdurchlässiges Trägerelement sind derartige Mikrostruktur-Gitter geeignet dazu, Strahlung unterschiedlicher Wellenlänge selektiv passieren zu lassen oder reflektieren zu können. Hierfür weist das Mikrostruktur-Gitter idealerweise Schichtdicken im Bereich der Stege von 0,25 - 0,45 µm, Stegbreiten von 0,2 - 0,8 µm und Stegabstände von 1 - 3 µm auf. Ein Mikrostruktur-Gitter mit derartigen Abmessung hat eine hohe Transmissivität für Licht mit Wellenlängen von 400 - 2.500 nm, wirkt jedoch für Infrarot-Wärmestrahlung (Wellenlänge circa 10 µm) als Spiegel. Das Sonnenlicht kann bei einer Abdeckscheibe mit Mikrostruktur-Gitter nahezu ungehindert in den Solarkollektor hinein gelangen, gleichzeitig sind Abstrahlungsverluste durch Infrarot-Wärmestrahlung sehr gering. Hierdurch kann mehr Sonnenstrahlungsenergie pro Fläche nutzbar gemacht werden.

In einer weiteren Ausgestaltung des erfindungsgemäßen Solarkollektors ist die Abdeckplatte opak. D.h. die Abdeckplatte lässt kein Licht transmittieren. Die Abdeckplatte ist dann eine Absorptionsplatte. Bei innenliegender Absorptionsschicht kann die Wärme sehr schnell an das Wärmeträgermedium übertragen werden. Abstrahlungsverluste sind gering und die Effizienz dementsprechend hoch.

Gemäß einer Variante der Erfindung ist die Abdeckplatte stoffschlüssig mit den Erhebungen der Platte verbunden. Somit wird eine dauerhafte und spiellose Verbindung geschaffen. Bei der Herstellung großer Stückzahlen wird zudem ein hoher Automatisierungsgrad erreicht, sodass die Herstellkosten gering sind.

Als sehr vorteilhaft erweist es sich die Abdeckplatte und die Platte zu verschweißen. Ultraschallverschweißungen sind hier besonders langlebig und fest. Um langgestreckte Verbindungen herstellen zu können, z.B. bei einer Platte mit trapezförmigem Profil, sollte die Abdeckplatte und die Platte mit einem Ultraschall-Rollnahtschweißverfahren ultraschallverschweißt werden. Hierfür wird eine Rotationssonotrode im Bereich der herzustellenden Verbindung über die Abdeckplatte oder die Platte geführt. Alternativ können die Abdeckplatte und die Platte verklebt sein.

Ferner sieht die Erfindung eine Ausgestaltung vor, bei welcher der Hohlraum parallele Strömungskanäle ausbildet. Hierdurch wird der Solarkollektor im Betrieb gleichmäßig von Wärmeträgermedium durchströmt. Hohlraumbereiche ohne Strömung, sowie lokole Wärmesenken (Cold Spots) und Wärmezentren (Hot Spots) werden so verhindert und die Effizienz der Wärmegewinnung ist hoch. Die parallelen Strömungskanäle können jeweils eingangsseitig mit einem gemeinsamen Verteilerkanal und ausgangsseitig mit einem gemeinsamen Sammelkanal verbunden sein.

Auch kann vorgesehen sein, dass der Hohlraum einen einzigen unverzweigten Strömungskanal ausbildet. Damit sind Hohlraumbereiche ohne Strömung auf ein Minimum reduziert und die Effizienz der Wärmegewinnung hoch. Der unverzweigte Strömungskanal kann hierbei mäanderförmig ausgebildet sein, um den Strömungsquerschnitt zu verringern und eine hohe Bewegungsgeschwindigkeit mit in der Folge auftretenden Verwirbelungen zu erzielen. Entsprechend wird die Wärme schnell von der Absorptionsschicht abtransportiert. Obligatorisch erstreckt sich der unverzweigte Strömungskanal vom Einlass zum Auslass. Idealerweise haben die Hohlräume einen Mindestdurchmesser von 4 mm, Zudem sollten wenigstens 90 % der Rückseite der Abdeckplatte an den Hohlraum angrenzen.

Auf der von der Abdeckplatte abgewandten Seite der Platte sollte eine Isolation (Wärmedämmung) angeordnet sein. Dies verhindert eine Wärmeabstrahlung, wodurch die Effizienz der Wärmegewinnung hoch ist. Dabei betrifft die Erfindung eine Version, bei welcher auf der von der Abdeckplatte abgewandten Seite der Platte eine Isolation stoffschlüssig mit der Platte verbunden ist. Durch das stoffschlüssige Aufbringen wird die Platte stabilisiert und besonders steif, ohne dass das Gewicht wesentlich erhöht ist. Eine ganzflächige Verbindung wäre hierfür ideal. Hierfür eignen sich unter anderem ein Anschäumen oder ein Aufkleben der Isolation. Bei einer Verbindung der Platte mit der Abdeckplatte durch Ultraschallschweißen, sollte die Isolation erst nachträglich mit der Platte verbunden werden, damit der Bereich der Platte um die Verbindungen beim Verschweißen von der Rückseite zugängig ist.

Ein besonderer Absatzmarkt tut sich für erfindungsgemäßen Solarkollektor auf, wenn dieser als Fassadenelement mit flacher Expositionsseite ausgebildet ist. Das geringe Gewicht und eine geringe Bauhöhe prädestinieren den Solarkollektor für diesen Einsatz. Üblicherweise werden die Abdeckplatte und die Platte von einem Kollektorrahmen eingefasst. Dieser sollte expositionsseitig nicht über die Abdeckplatte hinausstehen und diese nur mit einer schmalen Kante einfassen. Somit sind die erfindungsgemäßen Solarkollektoren zum Beispiel in eine Glasfassade integrierbar, ohne optische Einbußen hinnehmen zu müssen. Ergänzt werden könnte das Produktprogramm mit äußerlich gleich erscheinenden Fassadenelementen, die zum Beispiel in Schattenzonen eingesetzt werden können. Auch äußerlich gleich erscheinende Photovoltaik-Module sind herstellbar. Weitere Ergänzungen der Erfindungen betreffen den Einlass und/oder den Auslass, die bevorzugt am Kollektorrahmen angeordnet sind. Vorzugsweise sind sie parallel zur Abdeckplatte ausgerichtet sowie sich gegenüberliegend an dem Kollektorrahmen angeordnet. Mit gegenstückigen Steckrohrstutzen des Einlasses und des Auslasses können so mehrere Solarkollektoren in Reihe miteinander verbunden werden, ohne zusätzliche Leitungen vorsehen zu müssen und ohne die Bauhöhe zu erhöhen. Zusätzlich können die Solarkollektoren auf Stoß aneinandergereiht werden. Sofern notwendig sind Wärmedehnfugen vorzusehen.

Die Zeichnungen stellen Ausführungsbeispiele der Erfindung dar und zeigen in
- Fig. 1: einen Querschnitt durch einen Solarkollektor mit einer Platte aus einem Trapezblech;
- Fig. 2: einen Querschnitt durch einen Solarkollektor mit einer Platte mit becherförmigen Erhebungen sowie einer Abdeckplatte mit einer Absorptionsschicht;
- Fig. 3: eine Draufsicht auf einen Solarkollektor mit parallelen Strömungskanälen;
- Fig. 4: eine Draufsicht auf einen Solarkollektor mit einem mäanderförmigen, unverzweigten Strömungskanal; und
- Fig. 5: eine Draufsicht auf einen Solarkollektor mit einer Platte mit becherförmigen Erhebungen.

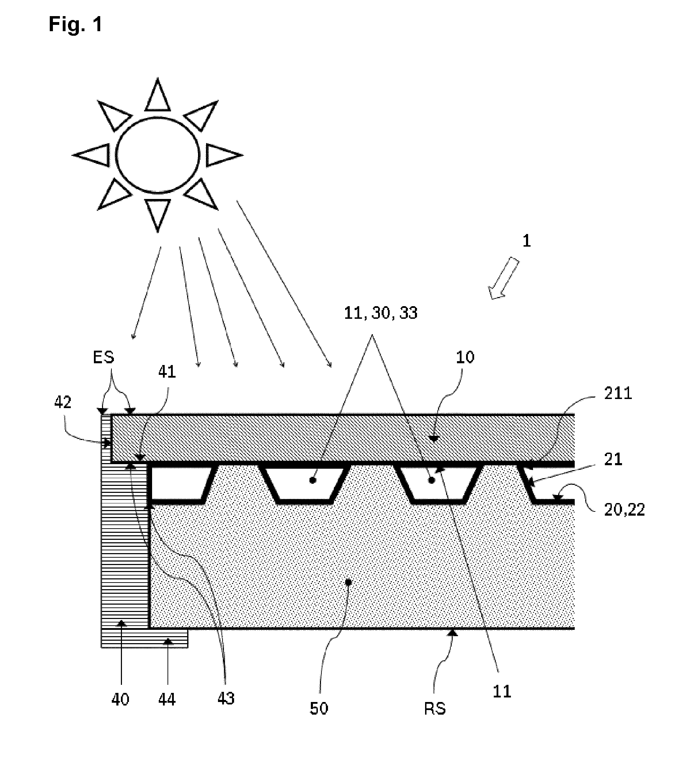

**Fig. 1** zeigt einen Querschnitt eines Solarkollektors 1 mit einem Hohlraum 30 für ein Wärmeträgermedium M zwischen einer expositionsseitigen ES gläsernen Abdeckplatte 10 und einer dahinter liegenden Platte 20. Die Platte 20 weist in Richtung der Abdeckplatte 10 ausgerichtete Erhebungen 21 auf, welche mit der Rückseite 11 der Abdeckplatte 10 verbunden sind. Die Platte 20 und die Abdeckplatte 10 stabilisieren sich aufgrund der Verbindungen an den Verbindungsflächen 211 der Erhebungen 21 gegenseitig. Hierfür ist die Abdeckplatte 10 stoffschlüssig mit den Erhebungen 21 der Platte 20 verbunden. Insbesondere sind die langgestreckten Verbindungsflächen 211 durch ein Ultraschall-Rollnahtschweißverfahren ultraschallverschweißt.

Die Platte 20 hat einen trapezprofil-förmigen Querschnitt 22. Insbesondere ist sie hierfür aus einem Trapezblech hergestellt. Das Trapezprofil bildet gemeinsam mit der Abdeckplatte benachbarte, parallele Strömungskanäle 33 aus. Der Hohlraum 30 und damit die Strömungskanäle 33 haben jeweils einen Durchmesser von mehr als 4 mm. Wie erkennbar ist, sind die Verbindungsflächen 211 des Trapezprofils zur Abdeckplatte 10 schmäler ausgebildet als zwischen zwei Verbindungsflächen 211 angeordnete Täler. Die Erhebungen 21 sind durch Umformen, insbesondere Tiefziehen einer ebenen Platte aus rostfreiem Metall hergestellt. Entsprechend sind die Erhebungen 21 einteilig mit der Platte 20 ausgebildet.

Die Abdeckplatte 10 ist eben ausgebildet und weist vor allem eine ebene zur Platte zeigende Rückseite 11 auf. Sie ist selektiv lichtundurchlässig, insbesondere reflektiert sie Infrarot-Wärmestrahlung. Alternativ kann die Abdeckplatte 10 opak ausgebildet sein und gar kein Licht transmittieren lassen.

Auf der von der Abdeckplatte 10 abgewandten Seite der Platte 20 ist eine Isolation 50 angeordnet, um Wärmeabstrahlung zu verhindern. Die Isolation 50 ist stoffschlüssig mit der Platte 20 verbunden und trägt maßgeblich zur Steifigkeit des Solarkollektors 1 bei. Durch eine Verhautung der aufgeschäumten Isolation 50, ist diese wasserabweisend und vor Insekten und Kleintierschäden geschützt.

Die Abdeckplatte 10, die Platte 20 und die Isolation 50 sind von einem Rahmen 40 eingefasst. Die Abdeckplatte 10 liegt dabei auf einer Stufe 41 des Rahmens 40, bzw. einer dort angeordneten Dichtung 43. Die Abdeckscheibe 10 selbst wird nur von einem schmalen Steg 42 des Rahmens 40 eingefasst. Eine weitere Dichtung 43 dichtet die Platte 20 relativ zum Rahmen 40 ab. An einem unteren Ende 44 des Rahmens, der hier als nach innen gerichteter Kragen ausgebildet ist, können Befestigungsmittel angeordnet werden, um den Solarkollektor 1 in einer Einbauposition zu montieren. Dieser Kragen am unteren Ende 44 des Rahmens 40 stützt zusätzlich die Isolation 50 von unten. Die Abdeckplatte 10, die Platte 20 und die Isolation 50 können auch rahmenlos ausgebildet sein.

Ferner ist der Solarkollektor 1 als Fassadenelement mit flacher Expositionsseite ES ausgebildet. Hierfür steht der Steg 42 des Rahmens 40 expositionsseitig ES nicht über die Abdeckplatte 10 hinaus.

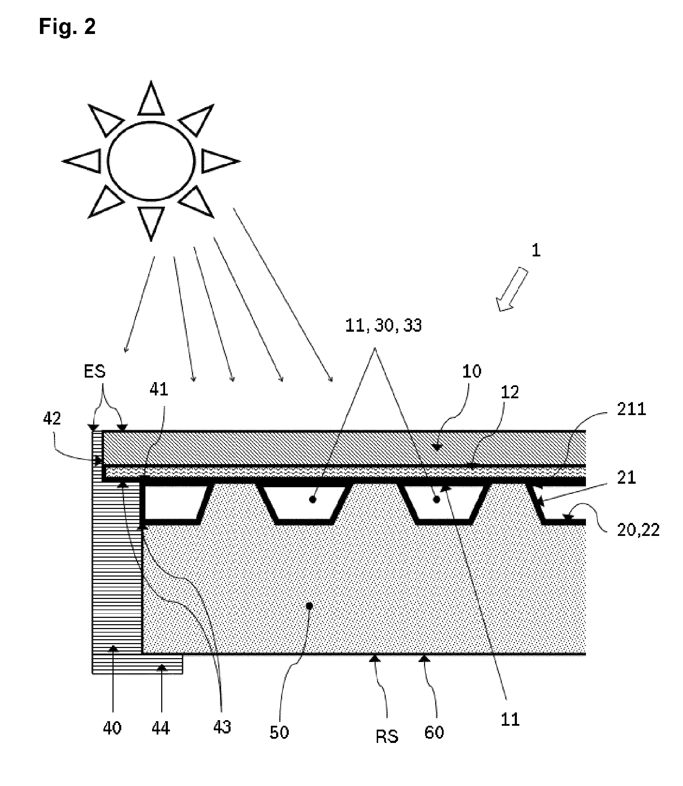

**Fig. 2** zeigt einen Querschnitt eines Solarkollektors 1 mit einem Hohlraum 30 für ein Wärmeträgermedium M zwischen einer expositionsseitigen ES gläsernen Abdeckplatte 10 und einer dahinter liegenden Platte 20. Die Platte 20 weist in Richtung der Abdeckplatte 10 ausgerichtete becherförmige Erhebungen 21 auf, welche mit der Rückseite 11 der Abdeckplatte 10 stoffschlüssig verbunden sind. Insbesondere sind die Verbindungsflächen 211 geklebt. Die becherförmigen Erhebungen 21 sind durch Umformen, insbesondere Tiefziehen einer ebenen Platte aus Kunststoff hergestellt. Entsprechend sind die Erhebungen 21 einteilig mit der Platte 20 ausgebildet.

Wie erkennbar ist, sind die Verbindungsflächen 211 der Erhebungen 21 zur Abdeckplatte 10 schmäler ausgebildet als zwischen zwei Verbindungsflächen 211 angeordnete Täler. Der Hohlraum 30 und damit die Strömungskanäle 33 haben jeweils einen Durchmesser von mehr als 4 mm. Die Platte 20 und die Abdeckplatte 10 stabilisieren sich aufgrund der Verbindungen an den Verbindungsflächen 211 der Erhebungen 21 gegenseitig. Durch die Becherstruktur wird eine gleichmäßige punktuelle Stützung der Abdeckplatte 10 bei minimierter Verbindungsfläche 211 erreicht.

Die Abdeckplatte 10 ist eben ausgebildet und weist vor allem eine ebene, zur Platte 20 zeigende Rückseite 11 auf. Hierbei verfügt die Rückseite 11 über eine Absorptionsschicht 12. Diese ist opak. Bei der Absorptionsschicht 12 handelt es sich um eine Folie, welche auf der Rückseite 211 der Abdeckplatte 10 auf eine ansonsten gläserne Platte aufgeklebt ist. Hierdurch sind die im Inneren des Solarkollektors 1 angeordneten Bestandteile, vor allem die verklebten Verbindungsflächen 211 und die Platte 20, nicht sichtbar. Entsprechend hat die Expositionsseite ES eine hochwertige Ästhetik. Dabei ist das äußere Erscheinungsbild der Expositionsseite ES an das eines Photovoltaikmoduls angepasst.

Zusätzlich lässt die Abdeckplatte 10 kein Licht transmittieren. Die Abdeckplatte 10 ist somit eine reine Absorptionsplatte. Durch die innenliegende Absorptionsschicht 12 kann die Wärme sehr schnell an das Wärmeträgermedium M übertragen werden. Abstrahlungsverluste sind gering und die Effizienz dementsprechend hoch.

Auf der von der Abdeckplatte 10 abgewandten Seite der Platte 20 ist eine Isolation 50 angeordnet, um Wärmeabstrahlung zu verhindern. Die Isolation 50 ist stoffschlüssig mit der Platte 20 verbunden und trägt maßgeblich zur Steifigkeit des Solarkollektors 1 bei und verringert Wärmeverluste. Ferner ist auf der Rückseite RS des Solarkollektors 1 eine dünne schützende Rückenplatte 60 angeordnet, um die Isolation 50 vor Wassereintritt und Tierschäden zu schützen.

Abdeckplatte 10, Platte 20 und die Isolation 50 sind von einem Rahmen 40 eingefasst. Die Abdeckplatte10 liegt dabei auf einer Stufe 41 des Rahmens 40, bzw. einer dort angeordneten Dichtung 43. Die Abdeckscheibe 10 selbst wird nur von einem schmalen Steg 42 des Rahmens 40 eingefasst. Eine weitere Dichtung 43 dichtet die Platte 20 relativ zum Rahmen 40 ab. An einem unteren Ende 44 des Rahmens, der hier als nach innen gerichteter Kragen ausgebildet ist, können Befestigungsmittel angeordnet werden, um den Solarkollektor 1 in einer Einbauposition zu montieren. Dieser Kragen am unteren Ende 44 des Rahmens 40 stützt zusätzlich die Isolation 50 und die Rückenplatte 60 von unten. Die Abdeckplatte 10, die Platte 20 und die Isolation 50 können auch rahmenlos ausgebildet sein.

Schließlich ist der Solarkollektor 1 als Fassadenelement mit flacher Expositionsseite ES ausgebildet. Hierfür steht der Steg 42 des Rahmens 40 expositionsseitig ES nicht über die Abdeckplatte 10 hinaus.

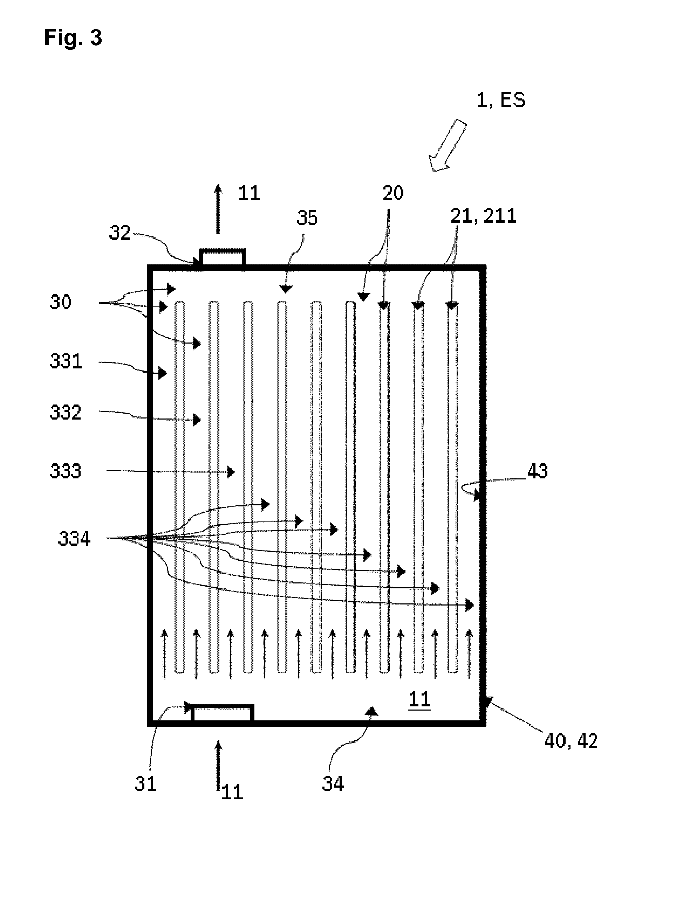

**Fig. 3** beschreibt eine Draufsicht auf einen Solarkollektor 1 mit parallelen Strömungskanälen 331, 332, 333, 334. Auf die Darstellung der Abdeckplatte wurde verzichtet, um das Innere des Solarkollektors 1 zu zeigen. Erkennbar ist der Solarkollektor 1 mit einem Hohlraum 30 für ein Wärmeträgermedium M zwischen der nicht gezeigten expositionsseitigen ES gläsernen Abdeckplatte und einer dahinter liegenden Platte 20. Der Hohlraum 30 ist mit einem Einlass 31 und einem Auslass 32 hydraulisch verbunden. Die Platte 20 weist in Richtung der Expositionsseite ES ausgerichtete Erhebungen 21 auf, welche mit der Rückseite der Abdeckplatte verbunden sind. Die Platte 20 und die Abdeckplatte 10 stabilisieren sich aufgrund der Verbindungen an den Verbindungsflächen 211 der Erhebungen 21 gegenseitig. Hierfür ist die Abdeckplatte 10 stoffschlüssig mit den Erhebungen 21 der Platte 20 verbunden. Insbesondere sind die langgestreckten Verbindungsflächen 211 durch ein Ultraschall-Rollnahtschweißverfahren ultraschallverschweißt.

Die Platte 20 hat einen trapezprofil-förmigen Querschnitt, wobei die Erhebungen 21 durch Umformen, insbesondere Tiefziehen einer ebenen Platte aus rostfreiem Metall hergestellt sind. Entsprechend sind die Erhebungen 21 einteilig mit der Platte 20 ausgebildet. Die Biegekanten der Erhebungen 21 sind entlang der langen Seite des Solarkollektors 1 ausgerichtet. Dabei reichen die Erhebungen 21 nicht bis zum Ende der Platte 20. An diesen Enden ist die Platte 20 jeweils flach, sodass hier auf der Seite des Einlasses 31 ein Verteilerkanal 34 und auf der Seite des Auslasses 32 ein Sammelkanal 35 zwischen der Platte 20 und der Abdeckplatte ausgebildet ist. Zwischen dem Verteilerkanal 34 und dem Sammelkanal 35 bildet das Trapezprofil gemeinsam mit der Abdeckplatte benachbarte, parallele Strömungskanäle 331, 332 333, 334 aus. Der Hohlraum 30 und damit die Strömungskanäle 331, 332 333, 334, der Verteilerkanal 34 und der Sammelkanal 35 haben jeweils einen Durchmesser von mehr als 4 mm.

Die Abdeckplatte, die Platte 20 und eine hinter der Platte 20 angeordnete Isolation sind von einem Rahmen 40 eingefasst. Dabei liegt die Abdeckplatte 10 auf einer Stufe des Rahmens 40, bzw. einer dort angeordneten Dichtung. Die Abdeckscheibe selbst wird nur von einem schmalen Steg 42 des Rahmens 40 eingefasst. Eine weitere Dichtung 43 dichtet die Platte 20 relativ zum Rahmen 40 ab. Der Einlass 31 und der Auslass 32 sind am Kollektorrahmen 41 angeordnet. Hierdurch sind sie parallel zur Abdeckplatte ausgerichtet. Weiterhin sind der Einlass 31 und der Auslass 32 sich gegenüberliegend an dem Kollektorrahmen 40 angeordnet. Mit gegenstückigen Steckrohrstutzen des Einlasses 31 und des Auslasses 32 können so mehrere Solarkollektoren 1 in Reihe miteinander verbunden werden, ohne zusätzliche Leitungen vorsehen zu müssen und ohne die Bauhöhe zu erhöhen. Zusätzlich können die Solarkollektoren 1 auf Stoß aneinandergereiht werden. Die Abdeckplatte 10, die Platte 20 und die Isolation 50 können auch rahmenlos ausgebildet sein.

Aus Richtung der Expositionsseite ES kann das Wärmeträgermedium M nunmehr von Sonnenstrahlung erwärmt werden, während es von dem Einlass 31 durch den Verteilerkanal 34 in die parallelen Strömungskanäle 331, 332, 333, 334 strömt, um anschließend über den Sammelkanal 35 zum Auslass 32 zu gelangen.

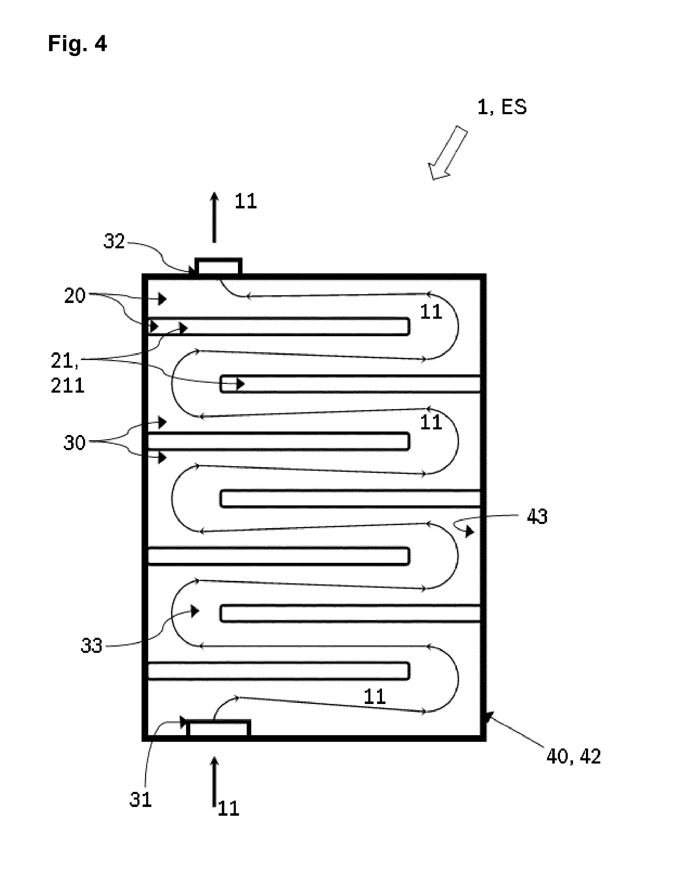

**Fig. 4** beschreibt eine Draufsicht auf einen Solarkollektor 1 mit einem mäanderförmigen, unverzweigten Strömungskanal 33. Auf die Darstellung der Abdeckplatte wurde verzichtet, um das Innere des Solarkollektors 1 zu zeigen. Erkennbar ist der Solarkollektor 1 mit einem Hohlraum 30 für ein Wärmeträgermedium M zwischen der nicht gezeigten expositionsseitigen ES gläsernen Abdeckplatte und einer dahinter liegenden Platte 20. Der Hohlraum 30 ist mit einem Einlass 31 und einem Auslass 32 hydraulisch verbunden. Die Platte 20 weist in Richtung der Expositionsseite ES ausgerichtete Erhebungen 21 auf, welche mit der Rückseite der Abdeckplatte verbunden sind. Die Platte 20 und die Abdeckplatte 10 stabilisieren sich aufgrund der Verbindungen an den Verbindungsflächen 211 der Erhebungen 21 gegenseitig. Hierfür ist die Abdeckplatte 10 stoffschlüssig mit den Erhebungen 21 der Platte 20 verbunden. Insbesondere sind die langgestreckten Verbindungsflächen 211 durch ein Ultraschall-Rollnahtschweißverfahren ultraschallverschweißt.

Die Platte 20 hat einen trapezprofil-förmigen Querschnitt, wobei die Erhebungen 21 durch Umformen, insbesondere Tiefziehen einer ebenen Platte aus Kunststoff hergestellt sind. Entsprechend sind die Erhebungen 21 einteilig mit der Platte 20 ausgebildet. Die Biegekanten der Erhebungen 21 sind entlang der kurzen Seite des Solarkollektors 1 ausgerichtet. Dabei reichen die Erhebungen 21 jeweils einseitig nicht bis zum Ende der Platte 20. An diesen Enden ist die Platte 20 jeweils flach, sodass hier eine Strömungsverbindung zwischen zwei parallelen Strömungskanalabschnitten 33 besteht. Der Hohlraum 30 und damit der Strömungskanal 33 haben einen Durchmesser von mehr als 4 mm. Die Abdeckplatte 10, die Platte 20 und die Isolation 50 können auch rahmenlos ausgebildet sein.

Die Abdeckplatte, die Platte 20 und eine hinter der Platte 20 angeordnete Isolation sind von einem Rahmen 40 eingefasst. Dabei liegt die Abdeckplatte10 auf einer Stufe des Rahmens 40, bzw. einer dort angeordneten Dichtung. Die Abdeckscheibe selbst wird nur von einem schmalen Steg 42 des Rahmens 40 eingefasst. Eine weitere Dichtung 43 dichtet die Platte 20 relativ zum Rahmen 40 ab. Der Einlass 31 und der Auslass 32 sind am Kollektorrahmen 40 angeordnet. Hierdurch sind sie parallel zur Abdeckplatte ausgerichtet. Weiterhin sind der Einlass 31 und der Auslass 32 sich gegenüberliegend an dem Kollektorrahmen 40 angeordnet. Mit gegenstückigen Steckrohrstutzen des Einlasses 31 und des Auslasses 32 können so mehrere Solarkollektoren 1 in Reihe miteinander verbunden werden, ohne zusätzliche Leitungen vorsehen zu müssen und ohne die Bauhöhe zu erhöhen. Zusätzlich können die Solarkollektoren 1 auf Stoß aneinandergereiht werden.

Aus Richtung der Expositionsseite ES kann das Wärmeträgermedium M nunmehr von Sonnenstrahlung erwärmt werden, während es von dem Einlass 31 durch den mäanderförmigen, unverzweigten Strömungskanal 33 strömen, um den Solarkollektor 1 anschließend über den Auslass 32 zu verlassen.

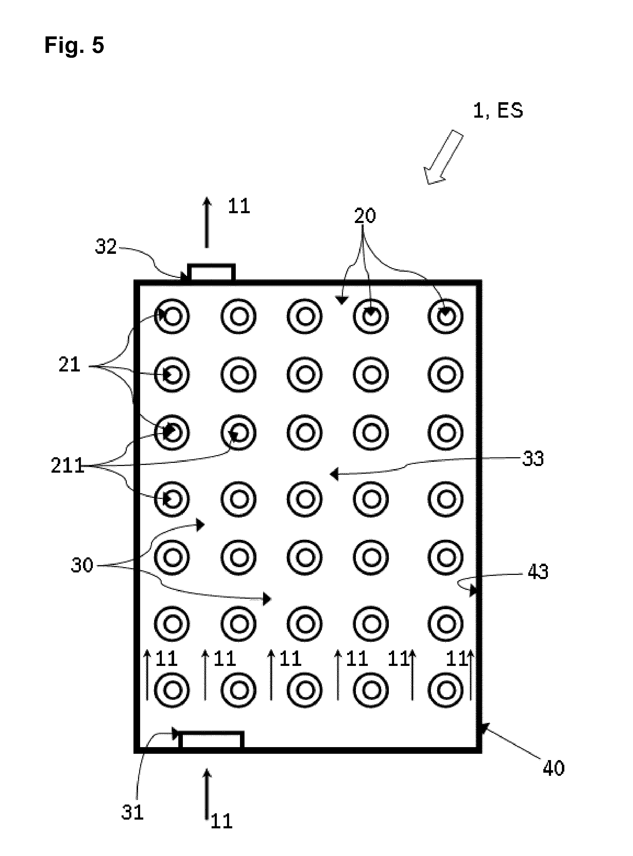

**Fig. 5** beschreibt eine Draufsicht auf einen Solarkollektor 1 mit einer Platte 20 mit becherförmigen Erhebungen 21. Auf die Darstellung der Abdeckplatte wurde verzichtet, um das Innere des Solarkollektors 1 zu zeigen. Erkennbar ist der Solarkollektor 1 mit einem Hohlraum 30 für ein Wärmeträgermedium M zwischen der nicht gezeigten expositionsseitigen ES gläsernen Abdeckplatte und der dahinter liegenden Platte 20. Der Hohlraum 30 ist mit einem Einlass 31 und einem Auslass 32 hydraulisch verbunden. Die Platte 20 weist in Richtung der Expositionsseite ES ausgerichtete Erhebungen 21 auf, welche mit der Rückseite der Abdeckplatte verbunden sind. Die Platte 20 und die Abdeckplatte 10 stabilisieren sich aufgrund der Verbindungen an den Verbindungsflächen 211 der Erhebungen 21 gegenseitig. Hierfür ist die Abdeckplatte 10 stoffschlüssig mit den Erhebungen 21 der Platte 20 verbunden. Insbesondere sind die kreisförmigen Verbindungsflächen 211 durch ein Ultraschallschweißverfahren ultraschallverschweißt.

Die Erhebungen 21 der Platte 20 sind durch Umformen, insbesondere Tiefziehen einer ebenen Platte aus Kunststoff hergestellt. Entsprechend sind die Erhebungen 21 einteilig mit der Platte 20 ausgebildet. Über die Fläche der Platte 20 sind die Erhebungen 21 in einem gleichmäßigen Raster verteilt. Dadurch stützt die Becherstruktur die Abdeckplatte punktuelle über die Fläche der Platte 20 verteilt, wobei die Verbindungsfläche 211 minimiert ist. Der Abstand zwischen zwei Erhebungen 21 ist jeweils größer als 4 mm, sodass auch der Hohlraum 30 und damit der Strömungskanal 33 einen minimalen Durchmesser von mehr als 4 mm aufweist.

Die Abdeckplatte, die Platte 20 und eine hinter der Platte 20 angeordnete Isolation sind von einem Rahmen 40 eingefasst. Dabei liegt die Abdeckplatte 10 auf einer Stufe des Rahmens 40, bzw. einer dort angeordneten Dichtung. Die Abdeckscheibe selbst wird nur von einem schmalen Steg 42 des Rahmens 40 eingefasst. Eine weitere Dichtung 43 dichtet die Platte 20 relativ zum Rahmen 40 ab. Der Einlass 31 und der Auslass 32 sind am Kollektorrahmen 40 angeordnet. Hierdurch sind sie parallel zur Abdeckplatte ausgerichtet. Weiterhin sind der Einlass 31 und der Auslass 32 sich gegenüberliegend an dem Kollektorrahmen 40 angeordnet. Mit gegenstückigen Steckrohrstutzen des Einlasses 31 und des Auslasses 32 können so mehrere Solarkollektoren 1 in Reihe miteinander verbunden werden, ohne zusätzliche Leitungen vorsehen zu müssen und ohne die Bauhöhe zu erhöhen. Zusätzlich können die Solarkollektoren 1 auf Stoß aneinandergereiht werden. Die Abdeckplatte 10, die Platte 20 und die Isolation 50 können auch rahmenlos ausgebildet sein.

Aus Richtung der Expositionsseite ES kann das Wärmeträgermedium M nunmehr von Sonnenstrahlung erwärmt werden, während es von dem Einlass 31 durch den zwischen den becherförmigen Erhebungen 21 ausgebildeten Strömungskanal 33 strömen, um den Solarkollektor 1 anschließend erwärmt über den Auslass 32 zu verlassen.

### Bezugszeichenliste

- 1: Solarkollektor

- 10: Abdeckplatte
- 11: Rückseite
- 12: Absorptionsschicht

- 20: Platte
- 21: Erhebung
- 211: Verbindungsfläche
- 22: Querschnitt

- 30: Hohlraum
- 31: Einlass
- 32: Auslass
- 33: Strömungskanal
- 331: erster Strömungskanal
- 332: zweiter Strömungskanal
- 333: dritter Strömungskanal
- 334: weiterer Strömungskanal
- 34: Verteilerkanal
- 35: Sammelkanal

- 40: Kollektorrahmen
- 41: Stufe
- 42: Steg
- 43: Dichtung
- 44: unteres Ende

- 50: Isolation

- 60: Rückenplatte

- ES: Expositionsseite
- RS: Rückseite
- M: Wärmeträgermedium

## Patentansprüche

1. Solarkollektor (1) mit einem Hohlraum (30) für ein Wärmeträgermedium (M) zwischen einer expositionsseitigen (ES) gläsernen Abdeckplatte (10) und einer dahinter liegenden Platte (20), wobei der Hohlraum (30) mit einem Einlass (31) und einem Auslass (32) hydraulisch verbunden ist,
**dadurch gekennzeichnet, dass** die Platte (20) in Richtung der Abdeckplatte (10) ausgerichtete Erhebungen (21) aufweist, welche mit der Rückseite (11) der Abdeckplatte (10) verbunden sind.

2. Solarkollektor (1) nach Anspruch 1,
**dadurch gekennzeichnet, dass** die Platte (20) einen trapezprofil-förmigen Querschnitt (22) hat.

3. Solarkollektor (1) nach Anspruch 1,
**dadurch gekennzeichnet, dass** die Erhebungen (21) der Platte (20) becherförmig sind.

4. Solarkollektor (1) nach einem der vorhergehenden Ansprüche,
**dadurch gekennzeichnet, dass** die Abdeckplatte (10) wenigstens selektiv lichtundurchlässig ist.

5. Solarkollektor (1) nach einem der vorhergehenden Ansprüche,
**dadurch gekennzeichnet, dass** die Abdeckplatte (10) eine wenigstens selektiv lichtundurchlässige Absorptionsschicht (12) aufweist.

6. Solarkollektor (1) nach Anspruch 5,
**dadurch gekennzeichnet, dass** die Absorptionsschicht (12) durch eine Folie gebildet ist.

7. Solarkollektor (1) nach einem der vorhergehenden Ansprüche,
**dadurch gekennzeichnet, dass** die Abdeckplatte (10) opak ist.

8. Solarkollektor (1) nach einem der vorhergehenden Ansprüche,
**dadurch gekennzeichnet, dass** die Abdeckplatte (10) stoffschlüssig mit den Erhebungen (21) der Platte (20) verbunden ist.

9. Solarkollektor (1) nach einem der vorhergehenden Ansprüche,
**dadurch gekennzeichnet, dass** der Hohlraum (30) parallele Strömungskanäle (33, 331, 332, 333, 334) ausbildet.

10. Solarkollektor (1) nach einem der vorhergehenden Ansprüche,
**dadurch gekennzeichnet, dass** der Hohlraum (30) einen einzigen unverzweigten Strömungskanal (33) ausbildet.

11. Solarkollektor (1) nach einem der vorhergehenden Ansprüche,
**dadurch gekennzeichnet, dass** auf der von der Abdeckplatte (10) abgewandten Seite der Platte (20) eine Isolation (50) stoffschlüssig mit der Platte (20) verbunden ist.

12. Solarkollektor (1) nach einem der vorhergehenden Ansprüche,
**dadurch gekennzeichnet, dass** dieser als Fassadenelement mit flacher Expositionsseite (ES) ausgebildet ist.
